(19) **Europäisches Patentamt / European Patent Office / Office européen des brevets**

(11) **EP 2 387 288 B1**

(12) **FASCICULE DE BREVET EUROPEEN**

(45) Date de publication et mention
de la délivrance du brevet:
**08.05.2013 Bulletin 2013/19**

(51) Int Cl.:
*H05B 33/08* (2006.01)  *B60Q 1/04* (2006.01)

(21) Numéro de dépôt: **11161235.4**

(22) Date de dépôt: **05.04.2011**

(54) **Procédé et dispositif de commande d'une pluralité d'ensembles de LED d'un véhicule automobile**

Verfahren und Vorrichtung zur Steuerung einer Vielzahl von LED-Anordnungen eines Kraftfahrzeugs

Method and device for controlling the multiple LED units of an automobile

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2010 FR 1053215**

(43) Date de publication de la demande:
**16.11.2011 Bulletin 2011/46**

(73) Titulaire: **VALEO VISION**
**93012 Bobigny (FR)**

(72) Inventeurs:
• **Roger, Christophe**
**49070 Saint-Lambert-la-Potherie (FR)**
• **Flandre, Loïc**
**94100 Saint Maur des Fossés (FR)**
• **Krick, Sébastian**
**75019 Paris (FR)**
• **Yvon, Sylvain**
**75018 Paris (FR)**

(56) Documents cités:
WO-A1-2008/132562    WO-A1-2009/129830
WO-A1-2010/030462    US-A1- 2005 179 393
US-A1- 2008 116 818   US-A1- 2010 091 807

**Description**

L'invention concerne un procédé et un dispositif de commande d'une pluralité d'ensembles de diodes électroluminescentes, ou LED, équipant un véhicule automobile. Dans la présente demande, un ensemble de LED peut être un ensemble de une LED ou de plusieurs LED.

Les véhicules automobiles actuels sont équipés d'ensembles de LED, à chacun de ces ensembles étant allouée une fonction spécifique d'éclairage et/ou de signalisation. Les fonctions spécifiques précitées, sinon les ensembles de LED eux-mêmes, font l'objet d'une réglementation stricte de leurs paramètres, parmi lesquels l'intensité d'éclairement minimum et/ou maximum, la puissance électrique nécessaire à l'exécution de chacune de ces fonctions, la répartition de l'intensité d'éclairement lorsque la fonction concerne l'éclairage routier, compte tenu des conditions de circulation.

Parmi les nombreuses fonctions mises en oeuvre actuellement sur les véhicules automobiles, on peut citer, notamment, à titre d'exemple non limitatif, les feux clignotant, désignés par TI pour Turn Indicator en anglais, les feux diurnes ou feux de gabarit désignés par DRL pour Day Running Light en anglais, les feux de position, désignés par PL pour Parking Light en anglais, les feux d'éclairage dans les coins accompagnant le braquage des roues directrices, désignés par CL pour Cornering Light en anglais. D'autres fonctions telles que les feux de stop, les feux de recul, les feux de route et les feux de croisement font partie de l'ensemble des fonctions mises en oeuvre par des ensembles de LED, que ce soit à l'avant, à l'arrière ou sur les parties latérales des véhicules automobiles actuels.

La multiplication de ces fonctions et des ensembles de LED correspondant à celles-ci pose toutefois non seulement le problème de la rationalisation de l'intégration de ces derniers sur les véhicules automobiles, mais également celui de leur alimentation en énergie électrique, conformément aux normes et réglementations en vigueur, et, surtout, de leur commande simultanée ou discrète, en un minimum de composants et de circuits.

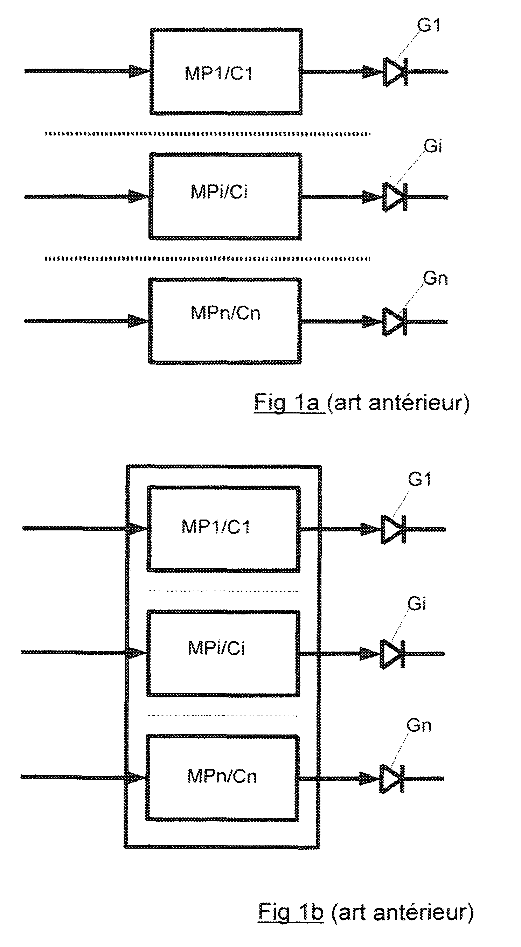

À l'heure actuelle, ainsi qu'illustré de manière schématique sur la figure 1a relative à l'art antérieur connu des inventeurs, un ensemble module de puissance/commande notés MP1/C1, Mpi/Ci à MPn/Cn est alloué à un ensemble de LED G1, Gi à Gn. Le module de puissance spécifique à l' ensemble de LED et à la fonction concernée est le plus souvent intégré au module de commande et adapté à délivrer une puissance électrique moyenne Pmi correspondant à la fonction de l'ensemble de LED Gi considéré.

Ce type d'architecture, simpliste, implique une multiplication des composants électriques et une augmentation de l'espace nécessaire à l'implémentation de l'ensemble des fonctions. En outre, dans l'hypothèse d'une multiplication des fonctions, la multiplication des modules de puissance/commande rend peu aisée la synchronisation de ces fonctions et des ensembles de LED y afférents.

Plus récemment, ainsi que représenté en figure 1b relative à l'art antérieur connu des inventeurs, afin de rendre plus aisée la synchronisation de plusieurs fonctions, un regroupement de l'étage de commande associé à plusieurs ensembles de LED correspondants a été proposé. Toutefois, cette nouvelle architecture bien que permettant de réduire l'encombrement global présente l'inconvénient de nécessiter un module de puissance spécifique par fonction et par ensemble de LED pour les raisons indiquées précédemment, sans toutefois faciliter la synchronisation des fonctions.

Dans les deux cas de l'art antérieur, tel qu'illustré en référence aux figures 1a et 1b, la prise en compte de fonctions supplémentaires nécessite impérativement l'adjonction d'au moins un module de puissance délivrant la puissance moyenne adéquate.

La présente invention à pour but de remédier aux inconvénients des solutions de l'art antérieur exposé précédemment.

En conséquence, un objet de la présente invention est la mise en oeuvre d'un procédé et d'un dispositif de commande d'une pluralité d'ensembles de LED dont l'architecture est simplifiée et rendue sensiblement indépendante du nombre de fonctions et d'ensembles de LED pris en compte.

En particulier, un objet de la présente invention est la mise en oeuvre d'un procédé de commande d'une pluralité d'ensembles de LED d'une très grande souplesse de mise en oeuvre indépendamment du nombre de fonctions et/ou d'ensembles de LED activés, le procédé objet de l'invention pouvant être rendu adaptatif au nombre d'ensembles de LED commandés.

Un autre objet de la présente invention est la mise en oeuvre d'un dispositif de commande d'une pluralité d'ensembles de LED à module de puissance unique, ce qui permet la mise en oeuvre d'une architecture aisément adaptative et évolutive en fonction du nombre d' ensembles de LED commandés.

Le procédé de commande d'une pluralité d'ensemble de LED d'un véhicule automobile, objets de l'invention, à partir d'une source de puissance électrique s'applique à des ensembles de LED auxquels à chacun de ces ensembles de LED est associée au moins une fonction d'éclairage et/ou de signalisation spécifique de ce véhicule.

Le procédé est remarquable en ce que, pour une puissance électrique nominale déterminée de la source, ce procédé comprend les étapes de moduler le niveau de puissance électrique délivrée par la source selon des niveaux de puissance distincts en relation avec la fonction associée à chaque ensemble de LED, multiplexer temporellement et transmettre successivement aux ensembles de LED les niveaux de puissance électrique distincts sur une période de multiplexage déterminée, dé-multiplexer et délivrer sélectivement chaque niveau de puissance électrique distinct à au moins un ensemble de LED.

Avantageusement, la modulation du niveau de puissance électrique comprend une modulation par impulsions de la puissance électrique délivrée à chaque ensemble de LED.

Avantageusement, la modulation du niveau de puissance électrique comprend une modulation du rapport cyclique des impulsions sur au moins une période de multiplexage.

Avantageusement, la modulation par impulsions du niveau de puissance électrique comprend, pour chaque niveau de puissance distinct, les étapes suivantes :

- établir le niveau moyen de puissance électrique associé à chaque fonction

- adapter le niveau de puissance électrique distinct et / ou le rapport cyclique sur la durée de la période de multiplexage.

Le procédé selon l'invention est en outre remarquable en ce que celui-ci comprend une étape de commander la modulation du rapport cyclique des impulsions de niveau de puissance distinct sur au moins une période de multiplexage sur déclenchement par un événement interne tel que commande manuelle du véhicule, respectivement détection d'un événement externe tel que détection d'un environnement diurne/nocturne, clair/obscur fortuit, variation du degré d'hygrométrie, variation de la température d'un ensemble d'une LED ou d'un ensemble de LED.

Selon le procédé, la période de multiplexage des niveaux distincts de puissance électrique est ajustable à une valeur maximum correspondant à une fréquence de multiplexage supérieure à 80 Hertz. Ceci permet d'améliorer la perception de flux lumineux continue par l'oeil humain.

La période de multiplexage des niveaux distincts de puissance électrique est ajustable à une valeur minimum correspondant à une fréquence de multiplexage inférieure à 400 Hertz. Ceci permet d'avoir un échauffement moins important des LED. Cela permet également d'avoir moins de contrainte sur les temps de réponse des moyens de pilotage des LED. Il est ainsi possible d'utiliser des composants moins coûteux. Egalement, le fait d'avoir moins d'échauffement simplifie la conception des modules optiques contenant une ou plusieurs de ces LED.

L'invention couvre également un dispositif de commande d'une pluralité d'ensembles de LED d'un véhicule automobile à partir d'une source de puissance électrique, à chaque ensemble de LED étant associée au moins une fonction d'éclairage ou de signalisation. Pour une puissance électrique nominale déterminée de la source, ce dispositif comporte au moins :

- des moyens de modulation du niveau de puissance électrique délivrée par la source selon des niveaux de puissance distincts en relation avec la fonction associée à chaque ensemble de LED ;
- des moyens de multiplexage et de transmission aux ensembles de LED des niveaux de puissance électrique distincts sur une période de multiplexage déterminée ;
- des moyens de démultiplexage et de distribution d'au moins un niveau de puissance électrique distinct à au moins un ensemble de LED.

Le dispositif de commande d'une pluralité d'ensembles de LED d'un véhicule automobile à partir d'une source de puissance électrique, à chaque ensemble de LED étant associée une fonction d'éclairage ou de signalisation, selon l'invention, est remarquable en ce que, pour une puissance électrique nominale déterminée de la source, ce dispositif comporte au moins :

- des moyens de modulation du niveau de puissance électrique délivrée par la source selon des niveaux de puissance distincts en relation avec la fonction associée à chaque ensemble de LED ;
- des moyens de multiplexage et de transmission aux ensembles de LED des niveaux de puissance électrique distincts sur une période de multiplexage déterminée ;
- des moyens de démultiplexage et de distribution d'au moins un niveau de puissance électrique distinct à au moins un ensemble de LED.

Le dispositif de commande selon l'invention est également remarquable en ce que les moyens de modulation du niveau de puissance électrique délivrée par la source comportent au moins :

- une source de puissance électrique unique délivrant une puissance électrique à courant ajustable selon un nombre de niveaux de courant distincts déterminé, chaque niveau de courant distinct correspondant à au moins un niveau de puissance électrique distinct ;
- un module de commande de puissance relié à la source de puissance électrique unique et permettant la sélection successive d'un niveau de courant distinct délivré par la source de puissance électrique.

Le dispositif selon l'invention est également remarquable en ce que les moyens de multiplexage et de démultiplexage comportent au moins :

- un module de commutation des ensembles de LED recevant les niveaux de courant distincts délivrés par la source de puissance électrique unique, chaque ensemble de LED étant relié au module de commutation pour recevoir ou non, sélectivement dans le temps, le niveau de courant distinct, et le niveau de puissance électrique distinct, associé à la fonction dévolue à chacun de ces ensembles de LED ;
- un module de commande de commutation relié d'une part au module de commande de puissance et d'autre part au module de commutation pour assurer par commande en synchronisme de la modulation de puissance et des niveaux distincts successifs de courant délivrés par la source de puissance unique et de la commutation des ensembles de LED, l'opération de multiplexage - démultiplexage temporel délivrant sélectivement chaque niveau de puissance électrique à au moins un ensemble de LED.

Le dispositif selon l'invention est également remarquable en ce que chaque ensemble de LED est en outre connecté en série à un générateur de courant ajustable commandé par le module de commande de commutation et permettant de moduler l'intensité du courant électrique et la puissance électrique distincte alimentant chaque ensemble de LED considéré.

Le dispositif selon l'invention est en outre remarquable en ce que le module de commande de puissance et le module de commande de commutation sont constitués par un microcontrôleur programmé.

Le dispositif selon l'invention est en outre remarquable en ce que le microcontrôleur programmé est relié à au moins une commande interne, commodo du véhicule automobile.

Le dispositif selon l'invention est en outre remarquable en ce que le microcontrôleur programmé est relié à au moins un capteur d'événement externe tel que l'environnement diurne/nocturne, clair/obscur fortuit, degré d'hygrométrie, capteur de température.

L'invention couvre également un produit de programme d'ordinateur enregistré sur un support de mémorisation et comportant une suite d'instructions exécutables par un ordinateur ou par un calculateur, par un circuit intégré spécialement dédié ou par un microcontrôleur dédié, pour la mise en oeuvre du procédé selon l'invention ou pour être mis en oeuvre par le dispositif selon l'invention. Il est remarquable en ce qu'il comporte au moins, pour une puissance électrique nominale déterminée de la source de puissance et pour une période déterminée de multiplexage :

- une étape de calcul du rapport cyclique des impulsions de puissance affecté à chaque ensemble de LED, le rapport cyclique étant défini par défaut par le rapport de la période de multiplexage au nombre d'ensembles de LED actifs ;
- une étape de détection de l'existence d'une commande interne ; et, en l'absence de commande interne,
- une étape de calcul de chaque niveau de puissance distinct dévolu à chaque ensemble de LED défini comme le rapport du niveau moyen de puissance électrique associée à la fonction dévolue à chaque ensemble de LED à la valeur du rapport cyclique de l'impulsion de puissance électrique sur la période de multiplexage ; sinon, en présence de commande interne,
- une étape de retour au calcul du rapport cyclique des impulsions de puissance affecté à chaque ensemble de LED après ré-actualisation du nombre d'ensembles de LED actifs, compte tenu de l'enclenchement ou du déclenchement d'au moins un ensemble de LED du fait de l'existence de la commande interne.

L'invention couvre également un produit de programme d'ordinateur enregistré sur un support de mémorisation et comportant une suite d'instructions exécutables par un ordinateur ou par un calculateur, par un circuit intégré spécialement dédié ou par un microcontrôleur dédié, pour la mise en oeuvre du procédé selon l'invention ou pour être mis en oeuvre par le dispositif selon l'invention. Il est remarquable en ce qu'il comporte au moins, pour une puissance électrique nominale déterminée de la source de puissance et pour une période déterminée de multiplexage :

- une étape de calcul de chaque niveau de puissance distinct dévolu à chaque ensemble de LED défini comme le rapport du niveau moyen de puissance électrique associée à la fonction dévolue à chaque ensemble de LED à la valeur du rapport cyclique de l'impulsion de puissance électrique sur la période de multiplexage ; et ,
- une étape de détection d'un événement externe ; et, en l'absence d'événement externe,
- une étape de retour à l'étape de calcul de chaque niveau de puissance distinct dévolu à chaque ensemble de LED ; sinon, en présence d'un événement externe modifiant les conditions d'éclairement de l'éclairage et/ou de la signalisation,
- une étape de retour à l'étape initiale, pour modification de la période de multiplexage et/ou du rapport cyclique.

Le procédé et le dispositif, objets de l'invention, trouvent application à la construction de véhicules automobiles de tout type, voiture particulière, véhicule poids lourd, engin de chantier, engin portuaire, véhicule à deux roues par

EP 2 387 288 B1

exemple.

Ils seront mieux compris à la lecture de la description ci-après et à l'observation des dessins dans lesquels, outre les figures 1a et 1b relatives à l'art antérieur,

- la figure 2 représente un chronogramme des opérations de modulation du niveau de puissance électrique et de multiplexage temporel de ces niveaux de puissance électrique vers les ensembles de LED considérés ;
- la figure 3 représente, à titre illustratif, un schéma fonctionnel du dispositif objet de l'invention ;
- la figure 4a représente un mode de mise en oeuvre particulier non limitatif du dispositif objet de l'invention appliqué à deux fonctions spécifiques telles que les fonctions DRL-PL et TI ;
- la figure 4b représente un chronogramme des signaux de commande appliqués aux ensembles de LED mettant en oeuvre les fonctions DRL-PL et TI précitées ;
- la figure 5 représente à titre purement illustratif un organigramme des étapes essentielles d'un produit de programme d'ordinateur permettant la mise en oeuvre du procédé et du dispositif objets de l'invention, compte tenu de l'existence ou de la non-existence d'une commande interne exécutée à l'initiative du conducteur du véhicule respectivement de l'existence ou non d'un événement extérieur modifiant l'intensité des éclairement nécessaires à l'exécution des fonctions d'éclairage et/ou de signalisation.

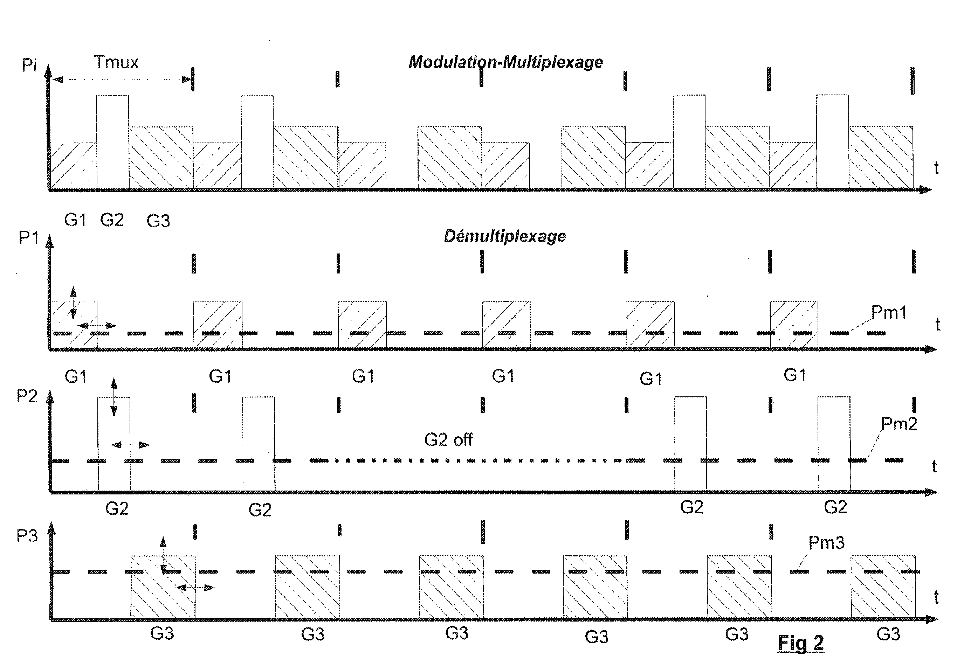

Une description plus détaillée du procédé objet de l'invention sera maintenant donnée en liaison avec la figure 2.
En référence à la figure précitée, le procédé objet de l'invention est mis en oeuvre à partir d'une source de puissance électrique de puissance nominale P0.
Il comprend, en référence à la figure 2, une étape de moduler le niveau de puissance électrique délivré par la source selon des niveaux de puissance distincts, noté chacun Pi, chacun de ces niveaux de puissance étant défini en relation avec la fonction associée à chaque ensemble ou ensemble de LED, noté Gi, correspondant.
À l'observation de la figure 2, on comprend qu'à chaque ensemble de LED Gi est associé un niveau de puissance moyen Pmi correspondant à la fonction de signalisation et ou d'éclairage de l' ensemble de LED Gi considéré.
En conséquence, le chronogramme, désigné *Modulation-Multiplexage* sur la figure 2, montre les niveaux de puissance distincts Pi successifs dans un nombre de niveaux de puissance distincts limité à trois, afin de ne pas surcharger le dessin, et les chronogrammes désignés *Démultiplexage* montrent le démultiplexage temporel des niveaux de puissance électrique distincts Pi transmis successivement à l'ensemble de LED Gi correspondant. On rappelle que la notion de multiplexage-démultiplexage temporel de signaux désigne la technique consistant à transmettre et recevoir plusieurs signaux d'informations distinctes sur un même support de transmission au moyen de plusieurs canaux élémentaires successifs définis par entrelacement dans le temps de ces signaux sur ces canaux élémentaires.
Ainsi, on comprend que les niveaux de puissance distincts Pi sont délivrés sélectivement à l'ensemble de LED correspondant de rang i. La modulation du niveau de puissance électrique au niveau de chaque ensemble de LED comprend une modulation par impulsions de la puissance électrique délivrée par la source de puissance au ensemble de LED.
Le courant d'alimentation li de chaque ensemble de LED n'est pas continu. On comprend, en particulier, que la modulation du niveau de puissance électrique de chaque niveau de puissance distinct Pi peut comprendre ou être, avantageusement, un ajustement, sinon une modulation par impulsions, de la tension nominale V0 délivrée par la source de puissance et/ou de l'intensité du courant électrique li consommé par chaque ensemble de LED Gi considéré. Préférentiellement, on ajuste le niveau de tension délivrée par la source de puissance , ce niveau pouvant être ajusté à une valeur voisine, inférieure ou supérieure à la tension nominale V0 délivrée par la source et on module l'intensité du courant électrique li consommé par chaque ensemble de LED.
Ainsi que représentée sur la figure 2, et pour une période de multiplexage Tmux de valeur déterminée préétablie, selon un aspect remarquable du procédé objet de l'invention, la modulation du niveau de puissance électrique peut comprendre une modulation du rapport cyclique Ci des impulsions de puissance distincts Pi sur la période de multiplexage considérée. Sur la figure 2 précitée, on indique que le processus de modulation des niveaux de puissance distincts Pi est symbolisé par des doubles flèches verticales appliquées à chacun des niveaux de puissance distincts et que le processus de modulation des rapports cycliques Ci est représenté par des doubles flèches horizontales, les doubles flèches précitées permettant de modifier par modulation les valeurs de puissance distincts Pi et/ou de rapports cycliques Ci.
Ainsi qu'on l'observera en outre sur la figure 2, une interruption d'une fonction de signalisation et ou d'éclairage est appliquée au ensemble de LED G2 par une interruption sur plusieurs périodes de multiplexage de l'alimentation en courant du ensemble de LED G2 considéré. Ainsi, la modulation par impulsion du niveau de puissance distinct Pi, et bien entendu du niveau de puissance électrique délivré par la source, peut comprendre, pour chaque niveau de puissance distinct, des étapes d'établir le niveau moyen de puissance électrique Pmi associé à chaque fonction et d'adapter le niveau de puissance électrique distinct Pi, par ajustement soit de la tension Vi ,soit de l'intensité li ou encore du rapport cyclique Ci des impulsions de puissance Pi délivrées à l'ensemble de LED Gi considéré, sur la durée de la période de multiplexage Tmux.

On comprend ainsi, que le procédé objet de l'invention comprend alors l'étape de commander la modulation du rapport cyclique des impulsions de niveau de puissance distinct sur au moins une période de multiplexage sur déclenchement par un événement interne au véhicule, tel que commande manuelle du commodo du véhicule par le conducteur de ce dernier, lors de la suppression d'une fonction, par exemple après exécution d'une commande de bifurcation du véhicule et de la fonction TI de feu clignotant correspondante, ainsi que représenté pour le ensemble de LED G2 illustré en figure2 ou lors de la détection d'un événement externe tel que détection d'un environnement diurne/nocturne, clair/obscur fortuit,lors du passage du véhicule dans un tunnel, ou même variation du degré d'hygrométrie brusque et/ou de la température d'une LED ou d'un ensemble de LED nécessitant une adaptation des niveaux ou intensités des éclairement des fonctions de signalisation et ou d'éclairage.

Enfin, la période de multiplexage Tmux des niveaux distincts Pi de puissance électrique peut être ajustée à une valeur correspondant à une fréquence de multiplexage supérieure à 80 Hertz. La période de multiplexage Tmux peut également être ajustée à une valeur correspondant à une fréquence de multiplexage inférieure à 400 Hertz. Les valeurs de période de multiplexage prises dans la plage de valeurs précitée permettent d'assurer à la fois une fréquence de commutation des signaux de signalisation et/ou d'éclairage compatible avec la persistance rétinienne humaine et une réduction des contraintes d'échauffement des LED ou ensembles de LED.

Un tel mode opératoire confère au procédé objet de l'invention une grande souplesse de mise en oeuvre et un très large caractère d'adaptabilité à tous types de véhicules et à leurs différentes conditions d'utilisation, ainsi qu'il sera décrit ultérieurement dans la description.

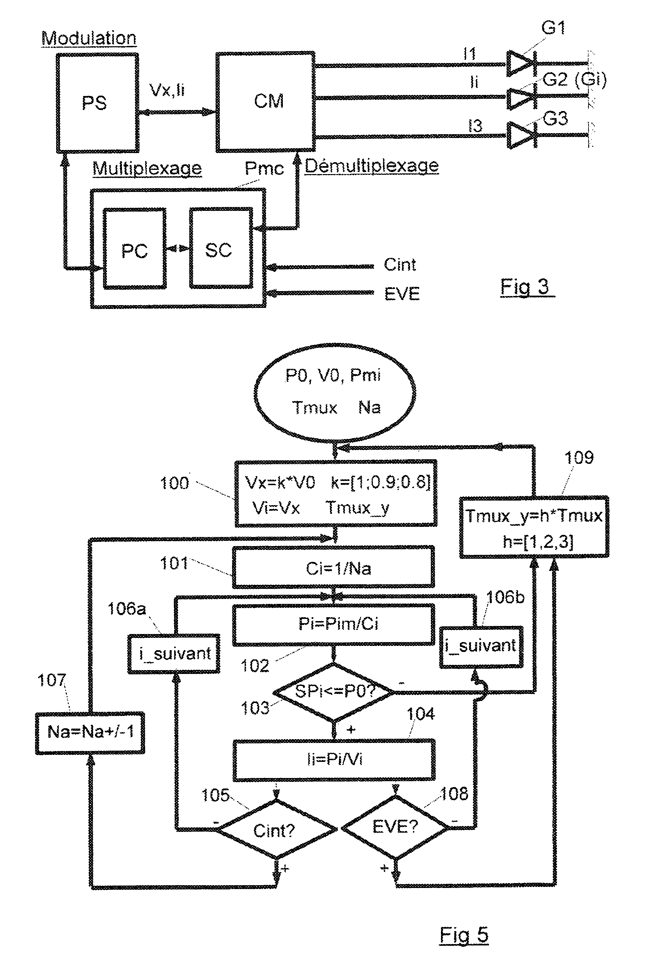

Le dispositif de commande d'une pluralité d'ensembles de LED pour véhicules automobiles, conforme à l'objet de la présente invention, sera maintenant décrit en liaison avec la figure 3.

Ainsi qu'on l'observera sur la figure précitée, ce dispositif comporte une source de puissance électrique, PS, délivrant par exemple une puissance électrique nominale déterminée de valeur P0.

Le dispositif objet de l'invention comporte également des ressources de modulation, notées Modulation, du niveau de puissance électrique délivré par la source selon les niveaux de puissance distincts Pi. Les niveaux de puissance distincts précités sont en relation directe avec la fonction associée à chaque ensemble de LED Gi.

En outre, le dispositif comprend des ressources de multiplexage et de transmission aux ensembles de LED Gi des niveaux de puissance électrique distincts Pi sur une période de multiplexage, notée Tmux. Sur la figure 3, les ressources de multiplexage sont notées Multiplexage.

Enfin, le dispositif objet de l'invention comporte des ressources de démultiplexage et de distribution d'au moins un niveau de puissance électrique distinct Pi a au moins un ensemble de LED Gi. Les ressources de démultiplexage et de distribution sont notées Démultiplexage.

Le dispositif de commande objet de l'invention est particulièrement remarquable en ce que les ressources de modulation Modulation comprennent une source de puissance électrique unique, notée PS, délivrant une puissance électrique à tension ajustable Vx selon un nombre de niveaux de tension distincts déterminé. Chaque niveau de tension distinct Vx délivré par la source de puissance électrique unique PS correspond à au moins un niveau de tension distinct Vi et à au moins un niveau de puissance distinct Pi. La source de puissance électrique PS est reliée à et commandée par un module de commande de puissance PC permettant la sélection successive d'un niveau de puissance distinct Pi à partir d'un niveau de tension distinct ajusté correspondant Vi délivré par la source de puissance électrique PS. Préférentiellement, un niveau de tension Vx étant choisi, on procède avantageusement à une modulation du courant li et donc de la puissance Pi consommée par l'ensemble de LED Gi considéré, ainsi que mentionné précédemment.

À titre d'exemple non limitatif, on indique que la source de puissance électrique unique PS peut avantageusement être constituée par un convertisseur de tension continue-continue, alimenté à partir de la batterie du véhicule. Ce type de convertisseur de type classique, connu de l'état de la technique, ne sera pas décrit en détail.

En référence à la même figure 3, on indique que les ressources de multiplexage-démultiplexage comprennent, par exemple, un module de commutation CM des ensembles ou ensembles de LED Gi. Le module précité reçoit les niveaux de tension et / ou de courant distincts Vi,li et donc les niveaux de puissance distincts Pi délivrés par la source de puissance électrique unique PS par l'intermédiaire d'un câble de puissance. Chaque ensemble de LED Gi est relié au module de commutation CM pour recevoir ou non, sélectivement dans le temps, ainsi que représenté en figure 2, le niveau de puissance électrique distinct Pi et le niveau de tension distinct et / ou de courant Vi,li associés à la fonction dévolue à l'ensemble de LED Gi considéré.

Un module de commande de commutation, noté SC, est prévu et relié, d'une part, au module de commande de puissance PC et, d'autre part, au module de commutation CM pour assurer par commande en synchronisme de la modulation de puissance , soit des niveaux distincts successifs de tension et/ou de courant Vi,li distincts et de puissance électrique distincts Pi délivrés par la source de puissance unique, et de la commutation des ensembles de LED Gi, l'opération de multiplexage - démultiplexage temporel délivrant sélectivement chaque niveau de puissance électrique à au moins un ensemble de LED.

Ainsi qu'on l'observera également sur la figure 3, chaque ensemble de LED Gi est en outre connecté en série directement au module de puissance, par l'intermédiaire d'un module de commutation CM, commandé par le module de commande de commutation SC. Ce dernier permet de moduler l'intensité du courant électrique Ii et la puissance électrique distincte Pi alimentant ainsi chaque ensemble de LED Gi considéré.

D'une manière plus spécifique, on indique que le module de commutation CM est avantageusement constitué par une batterie d'interrupteurs électroniques commandé chacun par le module de commande de commutation SC.

Enfin, sur la figure 3 on a représenté le module de commande de puissance PC et le module de commande de commutation SC comme deux modules distincts interconnectés pour assurer le synchronisme de la commande globale. Dans un mode de mise en oeuvre préférentiel non limitatif, les deux modules précités peuvent avantageusement être constitués par un élément unique formé par un micro contrôleur programmé, noté Pmc.

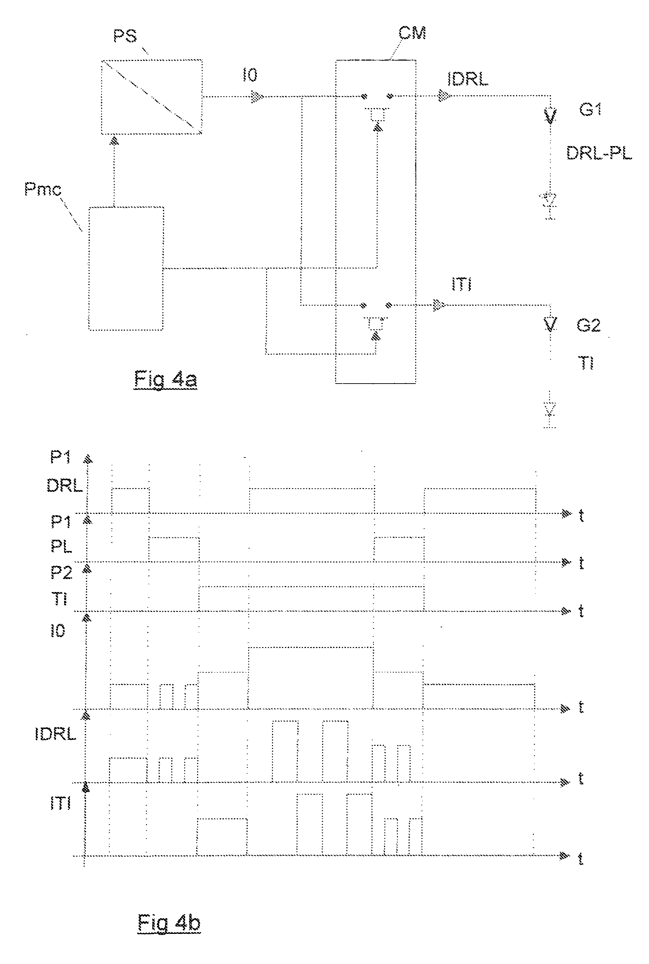

Un exemple de mise en oeuvre du dispositif de commande objet de l'invention, limité à la commande de deux ensembles de LED G1 et G2, auxquels les fonctions de DRL-PL respectivement de TI sont allouées, sera maintenant décrit en liaison avec les figures 4a et 4b.

La figure 4a reprend les éléments essentiels de la figure 3, le module de commutation CM étant représenté sous forme de la batterie d'interrupteurs, au nombre de 2, et permettant de piloter les ensembles de LED correspondants. Les générateurs d'intensité ne sont pas représentés sur la figure 2, afin de ne pas surcharger le dessin.

La figure 4b représente les chronogrammes d'intensité et donc de puissance électrique distincte délivrée à chacun des ensembles de LED G1 et G2 auxquels sont associées les fonctions DRL-PL respectivement TI.

Un processus de conduite des opérations de multiplexage et de modulation des niveaux de puissance distincts sera maintenant décrit en liaison avec la figure 5.

Le processus précité est mis en oeuvre par l'intermédiaire d'un programme d'ordinateur et bien entendu par le microcontrôleur programmé Pmc représenté en figure 3.

Le programme d'ordinateur précité permet en conséquence la mise en oeuvre du procédé et du dispositif de commande de ensemble de LED d'un véhicule automobile tels que décrits précédemment dans la description.

À titre d'exemple non limitatif, le programme d'ordinateur précité est enregistré sur un support de mémorisation et comporte une suite d'instructions exécutables par un ordinateur, tel que l'ordinateur de bord du véhicule, ou, préférentiellement, par un calculateur, par un circuit intégré spécialement dédié, encore appelé ASIC (pour « Application Specific Integrated Circuit »), ou par un microcontrôleur dédié, tel que le micro contrôleur programmé précédemment cité.

En référence à la figure 5, les variables d'état de départ de l'ensemble du système sont par exemple la puissance nominale P0 de la source de puissance unique, la tension nominale V0 délivrée par cette dernière, la puissance électrique moyenne Pmi associée à chacune des fonctions d'éclairage et/ou de signalisation mise en oeuvre, et la période de multiplexage Tmux. En outre, de manière avantageuse, les variables d'état précitées peuvent comprendre le nombre Na de ensembles de LED Gi en fonctionnement. Ce nombre peut, par exemple, être déterminé par l'ordinateur de bord du véhicule lors du démarrage de ce dernier.

En ce qui concerne la période de multiplexage, Tmux, cette dernière peut avantageusement être choisie à une valeur déterminée correspondant à une fréquence de multiplexage comprise entre 80 et 400 Hertz. Ces valeurs permettent, notamment, d'assurer une signalisation et/ou un éclairage perçu continûment par un observateur humain et permettent une conception simple et moins coûteuse des modules optiques comprenant les ensembles de LED du dispositif selon l'invention.

Ainsi que représenté sur la figure 5, le processus de conduite peut comprendre une étape 100 d'initialisation dans laquelle la valeur de la tension électrique Vx délivrée par la source de puissance électrique unique PS est établie à une valeur $Vx = k*V0$, le coefficient k pouvant prendre l'une des valeurs 1,0.9,0.8 par exemple. La valeur de la tension distincte Vi peut alors par exemple être établie à la valeur $Vi = Vx$. La valeur de la période de multiplexage courante notée Tmux_y peut alors être établie par défaut à la valeur Tmux retenue.

L'étape 100 peut être suivie d'une étape 101 de calcul d'un rapport cyclique $Ci = 1/Na$. Cette valeur, arbitraire par défaut, permet sensiblement de répartir la puissance électrique transmise par le module de commutation CM successivement aux ensembles de LED Gi actifs sur toute la durée de la période de multiplexage.

L'étape 101 est suivie d'une étape 102 de calcul de la puissance électrique distincte Pi courante, définie comme le rapport de la puissance électrique moyenne Pmi associée à la fonction du ensemble de LED Gi courant à la valeur du rapport cyclique Ci calculé à l'étape 101 précédente selon la relation $Pi = Pmi/Ci$. Une étape de test 103 de vérification permet de contrôler que la somme des puissances électriques distinctes allouées, notée SPi, $SPi = P1+...+Pi$, est inférieure ou égale à la puissance électrique nominale P0 de la source de puissance unique PS.

Sur réponse positive au test 103, une étape 104 est appelée permettant de calculer l'intensité du courant électrique Ii consommé par le ensemble de LED Gi courant, intensité définie comme le rapport de la puissance électrique distincte Pi calculée à l'étape 102 à la tension électrique Vi courante par la relation $Ii = Pi/Vi$.

L'étape 104 peut alors être suivie d'une étape 105 de test d'existence d'une commande interne Cint exécutée par le conducteur du véhicule par exemple. A l'étape 105, le test d'existence est noté Cint ?.

Sur réponse négative au test 105, une étape de retour à l'étape 102 est exécutée après passage à l'étape 106a au ensemble de LED suivant, l'étape 106 étant notée i_suivant.

7

On comprend que le bouclage précité sur l'étape 102 permet la poursuite itérative du calcul de l'intensité li du courant de chaque ensemble de LED Gi actif successif et d'alimenter ces derniers par le multiplexage de puissance électrique indiqué.

Au contraire, sur réponse positive au test 105, soit en présence de l'enclenchement respectivement du déclenchement d'une commande de signalisation et/ou d'éclairage par le conducteur du véhicule par exemple, un retour à l'étape 101 est exécuté par l'intermédiaire d'une étape 107 d'actualisation du nombre d'ensembles de LED actifs. Cette opération est notée Na =Na +/-1 à l'étape 107.

Sur réponse négative à l'étape de test 103, dans l'hypothèse où la somme des puissances distribuées SPi est supérieure à la puissance nominale P0 de la source de puissance électrique unique, un retour à l'étape d'initialisation 100 est exécuté pour réinitialisation de l'ensemble. Le retour précité peut être effectué avantageusement après réactualisation à l'étape 109 de la période de multiplexage à une valeur distincte de la précédente selon la relation :

$$Tmux\_y = h*Tmux, \text{ avec } h = [1,2 \text{ ou} 3] \text{ par exemple.}$$

On comprend, en particulier, que dans l'hypothèse où la somme des puissances distribuées apparaît supérieure à la puissance nominale de la source unique, l'initialisation de l'ensemble doit être ré-exécuté, une valeur de période de multiplexage différente pouvant être choisie. La ré-exécution de l'étape d'initialisation 100 permet également de recalculer le rapport cyclique Ci à l'étape 101 suivante.

En outre, ainsi qu'on l'a représenté en figure 5, suite à l'étape 104 par exemple, une étape de test 108 peut être exécutée, afin de déterminer l'existence d'un événement externe au véhicule, test noté EVE ?.

Sur réponse négative au test 108, en l'absence d'événement externe, un retour à l'étape 102 est exécuté pour poursuite du processus itératif de calcul de puissance électrique distincte Pi. Ce retour est effectué après réactualisation notée i_suivant à l'étape 106b, analogue à l'étape 106a.

Au contraire, sur réponse positive au test 108, un retour à l'étape d'initialisation 100 peut avantageusement être effectué par l'intermédiaire de l'étape 109 décrite précédemment.

Le processus précédent tel que décrit permet avantageusement de moduler et modifier l'ensemble des paramètres du processus et notamment la tension d'alimentation, l'intensité du courant d'alimentation des ensembles de LED Gi, ainsi que notamment, le rapport cyclique des impulsions de modulation de la puissance électrique distincte délivrée par multiplexage à ces derniers. Il permet en outre de manière particulièrement avantageuse de moduler ou ajuster la période de multiplexage dans la plage de valeur de fréquence de multiplexage compris entre 80 et 400 Hertz précédemment cités.

Ainsi, le procédé et le dispositif objets de l'invention permettent, en particulier, une très large souplesse d'utilisation, quel que soit le nombre de fonctions d'éclairage et/ou de signalisation implémentées et actives sur le véhicule automobile considéré. Ceci permet, notamment, d'optimiser l'alimentation des ensembles de LED en énergie électrique et la consommation d'énergie électrique ainsi réalisée. En outre, la possibilité de moduler ou ajuster la période de multiplexage et/ou le rapport cyclique des impulsions d'énergie électrique distribuées permet d'optimiser le fonctionnement de l'ensemble vis-à-vis des conditions extérieures au véhicule, telles que détection d'un environnement diurne/nocturne, clair/obscur fortuit, variations du degré d'hygrométrie et des conditions de visibilité corrélative, la régulation thermique et/ou la protection thermique des LED.

### Revendications

1. Procédé de commande d'une pluralité d'ensembles de LED d'un véhicule automobile à partir d'une source de puissance électrique, à chaque ensemble de LED étant associée une fonction d'éclairage et/ou de signalisation spécifique, **caractérisé en ce que**, pour une puissance électrique nominale déterminée de la source, ce procédé comprend au moins les étapes suivantes :

  - moduler le niveau de puissance électrique délivrée par la source selon des niveaux de puissance distincts en relation avec la fonction associée à chaque ensemble de LED ;
  - multiplexer temporellement et transmettre successivement aux ensembles de LED les niveaux de puissance électrique distincts sur une période de multiplexage déterminée ;
  - démultiplexer et délivrer sélectivement chaque niveau de puissance électrique distinct à au moins un ensemble de LED.

2. Procédé selon la revendication 1, **caractérisé en ce que** la modulation du niveau de puissance électrique comprend une modulation par impulsions de la puissance électrique délivrée à l'ensemble de LED.

3. Procédé selon la revendication 2, **caractérisé en ce que** la modulation du niveau de puissance électrique comprend une modulation du rapport cyclique des impulsions sur au moins une période de multiplexage.

4. Procédé selon l'une des revendications 2 ou 3, **caractérisé en ce que** la modulation par impulsions du niveau de puissance électrique comprend pour chaque niveau de puissance distinct, les étapes suivantes :

   - établir le niveau moyen de puissance électrique associé à chaque fonction
   - adapter le niveau de puissance électrique distinct et / ou le rapport cyclique sur la durée de la période de multiplexage.

5. Procédé selon l'une des revendications 2 à 4, **caractérisé en ce que** celui-ci comprend une étape de commander la modulation du rapport cyclique des impulsions de niveau de puissance distinct sur au moins une période de multiplexage sur déclenchement par un événement interne au véhicule tel que commande manuelle du véhicule, ou par la détection d'un événement externe tel que la détection d'un environnement diurne/nocturne, clair/obscur fortuit, variation du degré d'hygrométrie, variation de la température d'une LED ou d'un ensemble de LED.

6. Procédé selon l'une des revendications 1 à 5, **caractérisé en ce que** la période de multiplexage des niveaux distincts de puissance électrique est ajustable à une valeur maximum correspondant à une fréquence de multiplexage supérieure à 80 Hertz.

7. Procédé selon l'une des revendications 1 à 6, **caractérisé en ce que** la période de multiplexage des niveaux distincts de puissance électrique est ajustable à une valeur minimum correspondant à une fréquence de multiplexage inférieure à 400 Hertz.

8. Dispositif de commande d'une pluralité d'ensembles de LED d'un véhicule automobile à partir d'une source de puissance électrique, à chaque ensemble de LED étant associée au moins une fonction d'éclairage ou de signalisation, **caractérisé en ce que**, pour une puissance électrique nominale déterminée de la source, ce dispositif comporte au moins :

   - des moyens de modulation du niveau de puissance électrique délivrée par la source selon des niveaux de puissance distincts en relation avec la fonction associée à chaque ensemble de LED ;
   - des moyens de multiplexage et de transmission aux ensembles de LED des niveaux de puissance électrique distincts sur une période de multiplexage déterminée ;
   - des moyens de démultiplexage et de distribution d'au moins un niveau de puissance électrique distinct à au moins un ensemble de LED.

9. Dispositif de commande selon la revendication 8, **caractérisé en ce que** les moyens de modulation du niveau de puissance électrique délivrée par la source comportent au moins :

   - une source de puissance électrique unique délivrant une puissance électrique à tension ajustable selon un nombre de niveaux de courant distincts déterminé, chaque niveau de courant distinct correspondant à au moins un niveau de puissance électrique distinct ;
   - un module de commande de puissance relié à la source de puissance électrique unique et permettant la sélection successive d'un niveau de courant distinct délivré par la source de puissance électrique.

10. Dispositif selon l'une des revendications 8 ou 9, **caractérisé en ce que** les moyens de multiplexage et de démultiplexage comportent au moins :

    - un module de commutation des ensembles de LED recevant les niveaux de courant distincts délivrés par la source de puissance électrique unique, chaque ensemble de LED étant relié au module de commutation pour recevoir ou non, sélectivement dans le temps, le niveau de courant distinct, et le niveau de puissance électrique distinct, associé à la fonction dévolue à chacun de ces ensembles de LED ;
    - un module de commande de commutation relié d'une part au module de commande de puissance et d'autre part au module de commutation pour assurer par commande en synchronisme de la modulation de puissance et des niveaux distincts successifs de courant délivrés par la source de puissance unique et de la commutation des ensembles de LED l'opération de multiplexage - démultiplexage temporel délivrant sélectivement chaque niveau de puissance électrique à au moins un ensemble de LED.

11. Dispositif selon l'une des revendications 9 ou 10, **caractérisé en ce que** chaque ensemble de LED est en outre connecté en série à un générateur de courant ajustable commandé par le module de commande de commutation et permettant de moduler l'intensité du courant électrique et la puissance électrique distincte alimentant chaque ensemble de LED considéré.

12. Dispositif selon l'une des revendications 8 à 11, **caractérisé en ce que** le module de commande de puissance et le module de commande de commutation sont constitués par un microcontrôleur programmé.

13. Dispositif selon la revendication 12, **caractérisé en ce que** le microcontrôleur programmé est relié à au moins une commande interne, commodo du véhicule automobile.

14. Dispositif selon la revendication 12 ou 13, **caractérisé en ce que** le microcontrôleur programmé est relié à au moins un capteur d'événement externe tel que l'environnement diurne/nocturne, clair/obscur fortuit, degré d'hygrométrie, capteur de température.

15. Produit de programme d'ordinateur enregistré sur un support de mémorisation et comportant une suite d'instructions exécutables par un ordinateur ou par un calculateur, par un circuit intégré spécialement dédié ou par un microcontrôleur dédié, pour la mise en oeuvre du procédé selon l'une des revendications 1 à 7 ou pour être mis en oeuvre par un dispositif selon l'une des revendications 8 à 14, **caractérisé en ce que** ce programme comporte au moins, pour une puissance électrique nominale déterminée de la source de puissance et pour une période déterminée de multiplexage :

    - une étape de calcul du rapport cyclique des impulsions de puissance affecté à chaque ensemble de LED, le rapport cyclique étant défini par défaut par le rapport de la période de multiplexage au nombre d'ensembles de LED actifs ;
    - une étape de détection de l'existence d'une commande interne ; et, en l'absence de commande interne,
    - une étape de calcul de chaque niveau de puissance distinct dévolu à chaque ensemble de LED défini comme le rapport du niveau moyen de puissance électrique associée à la fonction dévolue à chaque ensemble de LED à la valeur du rapport cyclique de l'impulsion de puissance électrique sur la période de multiplexage ; sinon, en présence de commande interne,
    - une étape de retour au calcul du rapport cyclique des impulsions de puissance affecté à chaque ensemble de LED après ré-actualisation du nombre d'ensembles de LED actifs, compte tenu de l'enclenchement ou du déclenchement d'au moins un ensemble de LED du fait de l'existence de la commande interne.

16. Produit de programme d'ordinateur enregistré sur un support de mémorisation et comportant une suite d'instructions exécutables par un ordinateur ou par un calculateur, par un circuit intégré spécialement dédié ou par un microcontrôleur dédié, pour la mise en oeuvre du procédé selon l'une des revendications 1 à 7 ou pour être mis en oeuvre par un dispositif selon l'une des revendications 8 à 14, **caractérisé en ce que** celui-ci comporte au moins, pour une puissance électrique nominale déterminée de la source de puissance et pour une période déterminée de multiplexage :

    - une étape de calcul de chaque niveau de puissance distinct dévolu à chaque ensemble de LED défini comme le rapport du niveau moyen de puissance électrique associée à la fonction dévolue à chaque ensemble de LED à la valeur du rapport cyclique de l'impulsion de puissance électrique sur la période de multiplexage ; et ,
    - une étape de détection d'un événement externe ; et, en l'absence d'événement externe,
    - une étape de retour à l'étape de calcul de chaque niveau de puissance distinct dévolu à chaque ensemble de LED ; sinon, en présence d'un événement externe modifiant les conditions d'éclairement de l'éclairage et/ou de la signalisation,
    - une étape de retour à l'étape initiale, pour modification de la période de multiplexage et/ou du rapport cyclique.

**Patentansprüche**

1. Verfahren zum Steuern einer Vielzahl von durch eine elektrische Leistungsquelle gespeisten LED-Einheiten eines Kraftfahrzeugs, wobei jeder LED-Einheit eine spezifische Licht- und/oder Signalgebungsfunktion zugeordnet ist, **dadurch gekennzeichnet, dass** das Verfahren für eine bestimmte elektrische Nennleistung der Quelle wenigstens die folgenden Schritte umfasst:

- Modulieren des Pegels der von der Quelle gelieferten elektrischen Leistung entsprechend der individuellen Leistungspegel hinsichtlich der jeder LED-Einheit zugeordneten Funktion;
- Zeitmultiplexen und sukzessives Übertragen der individuellen elektrischen Leistungspegel an die LED-Einheiten über eine bestimmte Multiplexperiode;
- Demultiplexen und selektives Liefern eines jeden individuellen elektrischen Leistungspegels an wenigstens eine LED-Einheit.

2. Verfahren nach Anspruch 1,
**dadurch gekennzeichnet, dass** die Modulation des elektrischen Leistungspegels eine Impulsmodulation der an die LED-Einheit gelieferten elektrischen Leistung umfasst.

3. Verfahren nach Anspruch 2,
**dadurch gekennzeichnet, dass** die Modulation des elektrischen Leistungspegels eine Modulation des Impulstastverhältnisses über wenigstens eine Multiplexperiode umfasst.

4. Verfahren nach einem der Ansprüche 2 oder 3,
**dadurch gekennzeichnet, dass** die Impulsmodulation des elektrischen Leistungspegels für jeden individuellen Leistungspegel die folgenden Schritte umfasst.

- Festlegen des mittleren elektrischen Leistungspegels, der jeder Funktion zugeordnet ist;
- Anpassen des individuellen elektrischen Leistungspegels und/oder des Tastverhältnisses für die Dauer der Multiplexperiode.

5. Verfahren nach einem der Ansprüche 2 bis 4,
**dadurch gekennzeichnet, dass** es einen Schritt umfasst zum Steuern der Modulation des Impulstastverhältnisses mit individuellem Leistungspegel über wenigstens eine Multiplexperiode bei Auslösen durch ein fahrzeuginternes Ereignis, wie zum Beispiel die manuelle Betätigung des Fahrzeugs, oder durch Erkennen eines äußeren Ereignisses, wie zum Beispiel das Erkennen einer Tag-/Nacht-Umgebung, einer plötzlichen Hell-/Dunkel-Umgebung, Veränderung des Luftfeuchtigkeitsgrads, Veränderung der Temperatur einer LED oder einer LED-Einheit.

6. Verfahren nach einem der Ansprüche 1 bis 5,
**dadurch gekennzeichnet, dass** die Multiplexperiode der individuellen elektrischen Leistungspegel auf einen Maximalwert einstellbar ist, der einer Multiplexfrequenz von über 80 Hertz entspricht.

7. Verfahren nach einem der Ansprüche 1 bis 6,
**dadurch gekennzeichnet, dass** die Multiplexperiode der individuellen elektrischen Leistungspegel auf einen Minimalwert einstellbar ist, der einer Multiplexfrequenz von unter 400 Hertz entspricht.

8. Vorrichtung zum Steuern einer Vielzahl von durch eine elektrische Leistungsquelle gespeisten LED-Einheiten eines Kraftfahrzeugs, wobei jeder LED-Einheit wenigstens eine Licht- oder Signalgebungsfunktion zugeordnet ist,
**dadurch gekennzeichnet, dass** die Vorrichtung für eine bestimmte elektrische Nennleistung der Quelle wenigstens umfasst:

- Mittel zum Modulieren des Pegels der durch die Quelle gelieferten elektrischen Leistung entsprechend der individuellen Leistungspegel hinsichtlich der jeder LED-Einheit zugeordneten Funktion;
- Mittel zum Multiplexen und Übertragen der individuellen elektrischen Leistungspegel an die LED-Einheiten über eine bestimmte Multiplexperiode;
- Mittel zum Demultiplexen und Zuteilen wenigstens eines individuellen elektrischen Leistungspegels an wenigstens eine LED-Einheit

9. Steuervorrichtung nach Anspruch 8,
**dadurch gekennzeichnet, dass** die Mittel zum Modulieren des Pegels der von der Quelle gelieferten elektrischen Leistung wenigstens umfassen:

- eine einzige elektrische Leistungsquelle, die eine elektrische Leistung mit einer Spannung liefert, die sich auf eine bestimmte Anzahl individueller Strompegel einstellen lässt, wobei jeder individuelle Strompegel wenigstens einem individuellen elektrischen Leistungspegel entspricht;
- ein Leistungssteuerungsmodul, das mit der einzigen elektrischen Leistungsquelle verbunden ist und die sukzessive Wahl eines von der elektrischen Leistungsquelle gelieferten individuellen Strompegels erlaubt.

10. Vorrichtung nach einem der Ansprüche 8 oder 9,
**dadurch gekennzeichnet, dass** die Multiplex- und Demultiplexmittel wenigstens umfassen:

- ein Modul zum Schalten der LED-Einheiten, die die von der einzigen elektrischen Leistungsquelle gelieferten individuellen Strompegel empfangen, wobei jede LED-Einheit mit dem Schaltmodul verbunden ist, um den individuellen Strompegel und den individuellen elektrischen Leistungspegel, welcher der jeder der LED-Einheiten zugewiesenen Funktion zugeordnet ist, zeitlich ausgewählt zu empfangen oder nicht;
- Schaltsteuerungsmodul, das einerseits mit dem Leistungssteuerungsmodul und anderseits mit dem Schaltmodul verbunden ist, um durch Synchronsteuerung der Leistungsmodulation und der Modulation der von der einzigen Leistungsquelle gelieferten, sukzessiven individuellen Strompegel und der Schaltung der LED-Einheiten den Zeitmultiplex-Demultiplex-Vorgang zu gewährleisten, der selektiv jeden elektrischen Leistungspegel an wenigstens eine LED-Einheit liefert.

11. Vorrichtung nach einem der Ansprüche 9 oder 10,
**dadurch gekennzeichnet, dass** jede LED-Einheit ferner mit einem regulierbaren Stromgenerator in Reihe geschaltet ist, der durch das Schaltsteuerungsmodul gesteuert wird und das Modulieren der Stromstärke und der individuellen elektrischen Leistung erlaubt, mit der jede betreffende LED-Einheit gespeist wird.

12. Vorrichtung nach einem der Ansprüche 8 bis 11,
**dadurch gekennzeichnet, dass** das Leistungssteuerungsmodul und das Schaltsteuerungsmodul von einem programmierten Mikrocontroller gebildet sind.

13. Vorrichtung nach Anspruch 12,
**dadurch gekennzeichnet, dass** der programmierte Mikrocontroller mit wenigstens einer internen Steuerung, einem Kombischalter des Fahrzeugs verbunden ist.

14. Vorrichtung nach Anspruch 12 oder 13,
**dadurch gekennzeichnet, dass** der programmierte Mikrocontroller mit wenigstens einem Sensor zum Erfassen äußerer Ereignisse verbunden ist, wie zum Beispiel Tag-/Nacht-Umgebung, plötzliche Hell-/Dunkel-Umgebung, Luftfeuchtigkeitsgrad, Temperatursensor.

15. Computerprogrammprodukt, das auf einem Speichermedium gespeichert ist und eine Serie von Befehlen umfasst, die durch einen Computer oder einen Rechner, durch einen speziell hierfür vorgesehenen integrierten Schaltkreis oder einen speziell hierfür vorgesehenen Mikrocontroller ausführbar sind, zum Durchführen des Verfahrens nach einem der Ansprüche 1 bis 7 oder um von einer Vorrichtung gemäß einem der Ansprüche 8 bis 14 ausgeführt zu werden,
**dadurch gekennzeichnet, dass** das Programm für eine bestimmte elektrische Nennleistung der Leistungsquelle und für eine bestimmte Multiplexperiode wenigstens umfasst:

- einen Schritt zum Berechnen des jeder LED-Einheit zugewiesenen Leistungsimpulstastverhältnisses, wobei das Tastverhältnis durch das Verhältnis der Multiplexperiode zur Anzahl aktiver LED-Einheiten als Standardeinstellung definiert ist;
- einen Schritt zum Erkennen einer vorhandenen internen Steuerung; und bei nicht vorhandener interner Steuerung,
- einen Schritt zum Berechnen eines jeden individuellen Leistungspegels, der jeder LED-Einheit zugewiesen ist, der als das Verhältnis des mittleren elektrischen Leistungspegels, welcher der jeder LED-Einheit zugewiesenen Funktion zugeordnet ist, zum Wert des elektrischen Leistungsimpulstastverhältnisses über die Multiplexperiode definiert ist; andernfalls bei vorhandener interner Steuerung
- einen Schritt zum Zurückkehren zur Berechnung des jeder LED-Einheit zugewiesenen Leistungsimpulsverhältnisses nach erneutem Aktualisieren der Anzahl aktiver LED-Einheiten, unter Berücksichtigung des Einschaltens oder des Ausschaltens wenigstens einer LED-Einheit infolge der vorhandenen internen Steuerung.

16. Computerprogrammprodukt, das auf einem Speichermedium gespeichert ist und eine Serie von Befehlen umfasst, die durch einen Computer oder einen Rechner, durch einen speziell hierfür vorgesehenen integrierten Schaltkreis oder einen speziell hierfür vorgesehenen Mikrocontroller ausführbar sind, zur Durchführung des Verfahrens nach einem der Ansprüche 1 bis 7 oder um von einer Vorrichtung gemäß einem der Ansprüche 8 bis 14 ausgeführt zu werden,

**dadurch gekennzeichnet, dass** das Programm für eine bestimmte elektrische Nennleistung der Leistungsquelle und für eine bestimmte Multiplexperiode wenigstens umfasst:

- einen Schritt zum Berechnen eines jeden individuellen Leistungspegels, der jeder LED-Einheit zugewiesen ist, der als das Verhältnis des mittleren elektrischen Leistungspegels, welcher der jeder LED-Einheit zugewiesenen Funktion zugeordnet ist, zum Wert des elektrischen Leistungsimpulstastverhältnisses über die Multiplexperiode definiert ist; und
- einen Schritt zum Erkennen eines äußeren Ereignisses; und bei nicht vorhandenem äußeren Ereignis
- einen Schritt zum Zurückkehren zur Berechnung des jeder LED-Einheit zugewiesenen individuellen Leistungspegels; andernfalls bei einem vorhandenen äußeren Ereignis, das die Lichtverhältnisse für die Beleuchtung und/oder Signalgebung verändert,
- einen Schritt zum Zurückkehren zum Anfangsschritt zum Ändern der Multiplexperiode und/oder des Tastverhältnisses.

## Claims

1. Control process for a plurality of LED assemblies of an automotive vehicle from an electrical power source, there being associated with each LED assembly a specific lighting and/or signaling function, **characterized in that**, for a given rated electrical power of the source, this process comprises at least the following steps:

   - modulating the electrical power level delivered by the source according to distinct power levels with relation to the function associated with each LED assembly;
   - temporally multiplexing and successively transmitting the distinct electrical power levels to the LED assemblies over a given multiplexing period;
   - demultiplexing and selectively delivering each distinct electrical power level to at least one LED assembly.

2. Process according to claim 1, **characterized in that** the modulation of the electrical power level comprises a pulse modulation of the electrical power delivered to the LED assembly.

3. Process according to claim 2, **characterized in that** the modulation of the electrical power level comprises a modulation of the cyclic ratio of the pulses over at least one multiplexing period.

4. Process according to any one of claims 2 or 3, **characterized in that** the pulse modulation of the electrical power level comprises for each distinct power level the following steps:

   - establishing the average level of electrical power associated with each function;
   - adapting the distinct electrical power level and/or the cyclic ratio over the duration of the multiplexing period.

5. Process according to any one of claims 2 to 4, **characterized in that** this comprises a step of controlling the modulation of the cyclic ratio of the distinct power level pulses over at least one multiplexing period on activation by an event internal to the vehicle such as vehicle manual control, or by the detection of an external event such as the detection of a day/night or unexpected clear/obscure environment, variation in the degree of hygrometry, variation in the temperature of an LED or an LED assembly.

6. Process according to any one of claims 1 to 5, **characterized in that** the multiplexing period of the distinct electrical power levels is adjustable to a maximum value corresponding to a multiplexing frequency greater than 80 Hertz.

7. Process according to any one of claims 1 to 6, **characterized in that** the multiplexing period of the distinct electrical power levels is adjustable to a minimum value corresponding to a multiplexing frequency less than 400 Hertz.

8. Control device for controlling a plurality of LED assemblies of an automotive vehicle from an electrical power source, there being associated with each LED assembly at least one lighting or signaling function, **characterized in that**, for a given rated electrical power of the source, this device comprises at least:

- means of modulating the electrical power level delivered by the source according to distinct power levels with relation to the function associated with each LED assembly;
- means of multiplexing and transmitting the distinct electrical power levels to the LED assemblies over a given multiplexing period;
- means of demultiplexing and distributing at least one distinct electrical power level to at least one LED assembly.

**9.** Control device according to claim 8, **characterized in that** the means of modulating the electrical power level delivered by the source comprise at least:

- a single electrical power source delivering electrical power with adjustable voltage according to a given number of distinct current levels, each distinct current level corresponding to at least one distinct electrical power level;
- a power control module linked to the single electrical power source and enabling the successive selection of a distinct current level delivered by the electrical power source.

**10.** Device according to one from claims 8 or 9, **characterized in that** the means of multiplexing and demultiplexing comprise at least:

- a switching module for switching the LED assemblies receiving the distinct current levels delivered by the single electrical power source, each LED assembly being linked to the switching module so as to receive or not to receive, selectively over time, the distinct current level, and the distinct electrical power level, associated with the function devolved to each of these LED assemblies;
- a switching control module linked on one hand to the power control module and on the other hand to the switching module to ensure, by synchronized control, the modulation of power and of the successive distinct levels of current delivered by the single power source and of the switching of the LED assemblies, the temporary multiplexing-demultiplexing operation selectively delivering each electrical power level to at least one LED assembly.

**11.** Device according to any one of claims 9 or 10, **characterized in that** each LED assembly is also connected in series to an adjustable current generator controlled by the switching control module and making it possible to modulate the intensity of the electrical current and the distinct electrical power supplying each LED assembly concerned.

**12.** Device according to any one of claims 8 to 11, **characterized in that** the power control module and the switching control module are made up of a programmed microcontroller.

**13.** Device according to claim 12, **characterized in that** the programmed microcontroller is linked to at least one internal control, the automotive vehicle's column switch.

**14.** Device according to claim 12 or 13, **characterized in that** the programmed microcontroller is linked to at least one external event sensor such as the day/night or unexpected clear/obscure environment, degree of hygrometry, temperature sensor.

**15.** Computer program product recorded on a storage medium and comprising a sequence of instructions executable by a computer or by a calculator, by a specially dedicated integrated circuit or by a dedicated microcontroller, for the embodiment of the process according to any one of claims 1 to 7 or to be embodied by a device according to any one of claims 8 to 14, **characterized in that** this program comprises at least, for a given rated electrical power of the power source and for a given multiplexing period:

- a step of calculation of the cyclic ratio of the power pulses allocated to each LED assembly, the cyclic ratio being defined by default by the ratio of the multiplexing period to the number of active LED assemblies;
- a step of detection of the existence of an internal control; and, in the absence of any internal control,
- a step of calculation of each distinct power level devolved to each LED assembly defined as the ratio of the average electrical power level associated with the function devolved to each LED assembly to the value of the cyclic ratio of the electrical power pulse over the multiplexing period; otherwise, in the presence of an internal control,
- a step of returning to the calculation of the cyclic ratio of the power pulses allocated to each LED assembly after re-updating of the number of active LED assemblies, taking account of the activation or deactivation of at least one LED assembly due to the existence of the internal control.

16. Computer program product recorded on a storage medium and comprising a sequence of instructions executable by a computer or a calculator, by a specially dedicated integrated circuit or by a dedicated microcontroller, for the embodiment of the process according to any one of claims 1 to 7 or to be embodied by a device according to any one of claims 8 to 14, **characterized in that** this comprises at least, for a given rated electrical power of the power source and for a given multiplexing period:

- a step of calculation of each distinct power level devolved to each LED assembly defined as the ratio of the average electrical power level associated with the function devolved to each LED assembly to the value of the cyclic ratio of the electrical power pulse over the multiplexing period; and,
- a step of detection of an external event; and, in the absence of any external event,
- a step of returning to the step of calculation of each distinct power level devolved to each LED assembly; otherwise, in the presence of an external event modifying the conditions of illumination of the lighting and/or the signaling,
- a step of returning to the initial step, for modification of the multiplexing period and/or the cyclic ratio.

G1

MP1/C1

Gi

MPi/Ci

Gn

MPn/Cn

Fig 1a (art antérieur)

G1

MP1/C1

Gi

MPi/Ci

Gn

MPn/Cn

Fig 1b (art antérieur)

Modulation-Multiplexage

Démultiplexage

Tmux

G1 G2 G3

Pi

P'1 — G1 G1 G1 G1 G1 G1 — Pm1

P2 — G1 G1 G2 G2 G2 — G2 off — Pm2

P3 — G2 G3 G3 G3 G3 G3 G3 — Pm3

Fig 2

_Fig 3_

_Fig 5_

Fig 4a

Fig 4b